# NEUE EUROPÄISCHE PATENTSCHRIFT

(11) **EP 1 474 464 B2**
(45) Veröffentlichungstag und Bekanntmachung des Hinweises auf die Entscheidung über den Einspruch: **03.11.2010**
(45) Hinweis auf die Patenterteilung: 14.06.2006
(21) Anmeldenummer: 03714732.9
(22) Anmeldetag: 06.02.2003
(51) Int. Cl.: C08G 65/26

(54) **VERFAHREN ZUR AKTIVIERUNG VON DOPPELMETALLCYANID-VERBINDUNGEN**
METHOD FOR ACTIVATING DOUBLE METALLOCYANIDE-COMPOUNDS
PROCEDE D'ACTIVATION DE COMPOSES DE CYANURE BIMETALLIQUE

(30) Priorität: 07.02.2002 DE 10205086
(43) Veröffentlichungstag der Anmeldung: 10.11.2004
(73) Patentinhaber: BASF SE, 67056 Ludwigshafen (DE)
(72) Erfinder: STÖSSER, Michael, 67141 Neuhofen (DE); BOHRES, Edward, 68161 Mannheim (DE); GROSCH, Georg, Heinrich, 67098 Bad Dürkheim (DE); SAGER, Wilfried, 67112 Mutterstadt (DE)
(74) Vertreter: Isenbruck, Günter
(86) Internationale Anmeldenummer: PCT/EP2003/001174
(87) Internationale Veröffentlichungsnummer: WO 2003/066706

(56) Entgegenhaltungen:
- WO-A-01/10933
- WO-A-98/52689
- WO-A1-99/10407
- US-A- 5 714 639
- US-A- 6 077 978

## Beschreibung

Die vorliegende Erfindung betrifft ein Verfahren zur Umsetzung von Epoxiden mit einer Starter-Verbindung in Gegenwart einer Doppelmetallcyanid-Verbindung als Katalysator mit verkürzter Induktionsperiode, wobei die Aktivierung der Doppelmetallcyanid-Verbindung durch Zugabe des Epoxids zu einem Gemisch aus Doppelinetallcyanid-Verbindung und Starterverbindung bei einem Reaktorinnendruck von kleiner als 1 bar erfolgt, sowie die durch ein derartiges Verfahren erhältlichen Polyether selbst.

Aus der Literatur ist bekannt, dass Doppelmetallcyanid-Verbindungen (DMC-Verbindungen) als Katalysatoren zur Umsetzung von Startermolekülen mit aktivem Wasserstoff und Epoxiden, beispielsweise in einer Polymerisationsreaktion eingesetzt werden können. Die Ring-öffnende Polymerisationen von Alkylenoxiden wird beispielsweise in der EP-A 0 892 002, EP-A 0 862 977 und in der EP-A 0 755 716 beschrieben. DMC-Verbindungen weisen bei der Polymerisation von Epoxiden eine hohe Aktivität als Katalysator auf. Dennoch sind aus dem Stand der Technik Nachteile dieser Katalysatoren, wie beispielsweise eine zu Beginn der Reaktion zu beobachtende Induktionsperiode, bekannt.

Unter einer Induktionsperiode wird verstanden, dass der Katalysator nicht sofort aktiv ist, sondern erst im Kontakt mit der Starterverbindung und dem Epoxid nach einer gewissen Zeit seine Aktivität erlangt. Diese Induktionsperiode äußerst sich beispielsweise dadurch, dass nach der Dosierung einer kleinen Menge des Epoxids ein gewisser Druck im Reaktor entsteht, der für eine gewisse Zeit konstant bleibt und am Ende der Induktionsperiode schnell abfällt. Nach dem Druckabfall ist der Katalysator aktiv, und die weitere Dosierung des Epoxids kann erfolgen.

Bisher ist keine Erklärung für die Reaktion während dieser Induktionsperiode bekannt. Die Induktionsperiode zur Aktivierung einer DMC-Verbindung dauert beispielsweise zwischen wenigen Minuten und mehreren Stunden. Diese Induktionsperiode führt zu verschiedenen Problemen bei der Verwendung von DMC-Verbindungen als Katalysator. So befindet sich während der Induktionsperiode freies Epoxid im Reaktor, das zu sicherheitstechnischen Problemen führen kann. Dies ist insbesondere dann der Fall, wenn der Katalysator trotz sehr langer Wartezeiten nicht anspringt. Darüber hinaus kann freies Epoxid, das sich lange bei hohen Temperaturen im Reaktor befindet. Nebenreaktionen eingehen. Eine derartige Nebenreaktion könnte beispielsweise die Isomerierung des Epoxids zu den entsprechenden Aldehyd sein oder eine Umlagerung zum Allylalkohol. Diese Nebenreaktionen führen zu unerwünschten Nebenprodukten, die eine aufwendige Reinigung der Produkte erforderlich machen.

Darüber hinaus führt eine lange Induktionsperiode zu einem Ausfall an Reaktorkapazität, was zu einer Verteuerung des Verfahrens führt.

Um diese Nachteile zu beseitigen, wurden im Stand der Technik bereits verschiedene Verfahren beschrieben, die die Induktionsperiode bei der Aktivierung von DMC-Verbindungen verkürzen.

So wird in der WO 98/52689 ein Verfahren zur Verkürzung der Induktionsperiode beschrieben, bei dem zusätzlich zur konventionellen Vakuumbehandlung des Starter-/DMC-Gemisches weitere Maßnahmen zur Behandlung dieses Gemisches durchgeführt werden. Eine derartige Maßnahme gemäß der WO 98/52689 ist beispielsweise das Einleiten von gasförmigem Stickstoff. Ein derartiges Verfahren erfordert große technische Veränderungen an den zu verwendenden Apparaten.

Die zeitaufwändige Entwässerung führt darüber hinaus zu Verlust an Reaktorkapazität, was das Produkt weiter verteuert

In der WO 01/10933 wird ein Verfahren zur Verkürzung der Induktionsperiode beschrieben, bei dem der Epoxiddruck im Reaktor durch kontinuierliche Dosierung von Epoxid konstant gehalten wird. Auch dieses Verfahren birgt die Gefahr einer Akkumulation von Epoxid, die wiederum zu den oben genannten Problemen für die Sicherheit und Qualität der Produkte führt.

Ausgehend vom Stand der Technik lag der vorliegenden Erfindung daher die Aufgabe zugrunde, ein Verfahren bereit zu stellen, bei dem eine Verkürzung der Induktionsperiode erreicht wird, ohne dass größere technische Änderungen in vorhandenen Anlagen für die DMC-katalysierte Umsetzung von Epoxiden erforderlich sind.

Diese Aufgabe wird gelöst durch ein Verfahren zur Umsetzung von Epoxiden mit einer Starterverbindung in Gegenwart einer Doppelmetallcyanid-Verbindung als Katalysator mit verkürzter Induktionsperiode, umfassend mindestens die Stufe (1) und (2)
(1) Aktivierung der Doppelmetallcyanid-Verbindung durch Zugabe des Epoxids zu einem Gemisch aus Doppelmetallcyanid-Verbindung und Starterverbindung, wobei der Reaktorinnendruck kleiner als 1 bar (a) ist,
(2) Polymerisation eines Epoxids in Gegenwart einer gemäß Stufe (1) aktivierten Doppelmetallcyanid-Verbindung,
wobei mindestens 5 % der Gesamtmenge des im Verfahren eingesetzten Epoxids bei einem Reaktorinnendruck von kleiner als 1 bar (a) zugegeben werden.

Durch die Dosierung des Epoxids in den evakuierten Reaktor bei einem Reaktorinnendruck von kleiner als 1 bar (a) wird überraschenderweise ein sofortiges Anspringen der Reaktion erreicht Dies ist um so erstaunlicher, als in der Regel davon ausgegangen wird, dass zu Beginn der Induktionsperiode ein gewisser Epoxidüberdruck für die Aktivierung der DMC-Verbindung notwendig ist Der Epoxidüberdruck sollte zu einer Erhöhung der Löslichkeit des Epoxids in dem Gemisch aus DMC-Verbindung und Starter-Verbindung fuhren.

Der Reaktorinnendruck ist bei der Zugabe des Epoxids erfindungsgemäß kleiner als 1 bar (a). Das heißt, dass nach der konventionellen Vakuumbehandlung des Gemisches aus Doppelmetallcyanid-Verbindung und Starter-Verbindung bei erhöhten Temperaturen das Vakuum nicht oder nur partiell gebrochen wird, beispielsweise mit Stickstoff, und dass anschließend bei der Reaktionstemperatur das Epoxid in den Reaktor bei einem Innendruck von kleiner als 1 bar (a), bevorzugt kleiner als 500 mbar (c), insbesondere kleiner als 200 mbar (c), besonders bevorzugt kleiner als 100 mbar (c), beispielsweise kleiner als 50 mbar (c) zugegeben wird.

In einer bevorzugten Ausführungsform betrifft die vorliegende Erfindung daher ein Verfahren zur Umsetzung von Epoxiden mit einer Starterverbindung in Gegenwart einer Doppelmetallcyanid-Verbindung als Katalysator mit verkürzter Induktionsperiode, wobei der Reaktorinnendruck bei der Zugabe gemäß Stufe (1) kleiner als 500 mbar (c) ist.

Erfindungsgemäß ist es auch möglich, dass neben der Vakuumbehandlung des Gemisches aus DMC-Verbindung und Starter-Verbindung weitere Behandlungsschritte erfolgen, wie beispielsweise in der WO 98/52689 offenbart.

Die Starter-Verbindung sind monofunktionelle Alkohole mit 2 bis 24 C-Atomen, besonders bevorzugt sind erfindungsgemäß Starter-Verbindungen mit 8 bis 15 C-Atomen, insbesondere 10 bis 15 C-Atomen wie beispielsweise Tridekanol.

Erfindungsgemäß geeignete Alkohole sind also insbesondere Octanol, Nonanol, Dekanol, Undekanol, Dodekanol, Tridekanol, Tetradekanol, Pentadekanol, iso-Octanol, iso-Nonanol, iso-Dekanol, iso-Undekanol, iso-Dodekanol, iso-Tridekanol, iso-Tetradekanol, iso-Pentadekanol, bevorzugt iso-Dekanol, 2-Propylheptanol, Tridekanol, iso-Tridekanol oder Gemische aus C₁₃- bis C₁₅₋Alkoholen.

Als DMC-Verbindung können prinzipiell alle dem Fachmann bekannten geeigneten Verbindungen verwendet werden.

Als Katalysator geeignete DMC-Verbindungen sind beispielsweise in der WO 99/16775 und der DE-A- 10117273 beschrieben. Erfindungsgemäß werden insbesondere Doppelmetallcyanid-Verbindung der allgemeinen Formel 1 als Katalysator für das erfindungsgemäße Verfahren eingesetzt:

M¹ₐ[M²(CN)_{b}(A)ₑ]_{d} · fM¹_{g}Xₙ · h(H₂O) · eL · kP (I),

in der
- M¹ mindestens ein Metallion, ausgewählt aus der Gruppe bestehend aus Zn²⁺, Fe²⁺, Fe³⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺, Hg²⁺, Pd²⁺, Pt²⁺, V²⁺, Mg²⁺, Ca²⁺, Ba²⁺, Cu²⁺, La³⁺, Ce³⁺, Ce⁴⁺, Eu³⁺, Ti³⁺, Ti⁴⁺, Ag⁺, Rh²⁺, Rh³⁺, Ru²⁺, Ru³⁺ ist,
- M² mindestens ein Metallion, ausgewählt aus der Gruppe bestehend aus Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺ist,
- A und X unabhängig voneinander ein Anion, ausgewählt aus der Gruppe, bestehend aus Halogenid, Hydroxid, Sulfat, Carbonat, Cyanid, Thiocyanat, Isocyanat, Cyanat, Carboxylat, Oxalat, Nitrat, Nitrosyl, Hydrogensulfat, Phosphat, Dihydrogenphosphat, Hydrogenphosphat oder Hydrogencarbonat sind,
- L ein mit Wasser mischbarer Ligand ist, ausgewählt aus der Gruppe, bestehend aus Alkoholen, Aldehyden, Ketonen, Ethern, Polyethern, Estern, Polyestern, Polycarbonat, Harnstoffen, Amiden, primären, sekundären und tertiären Aminen, Liganden mit Pyridin-Stickstoff, Nitrilen, Sulfiden, Phosphiden, Phosphiten, Phosphanen, Phosphonaten und Phosphaten,
- k eine gebrochene oder ganze Zahl größer oder gleich Null ist, und
- P ein organischer Zusatzstoff ist,
- a, b, c, d, g und n so ausgewählt sind, dass die Elektroneutralität der Verbindung (I) gewährleistet ist, wobei c = 0 sein kann,
- e die Anzahl der Ligandenmoleküle eine gebrochenen oder ganze Zahl größer 0 oder 0 ist,
- f, k, h und m unabhängig voneinander eine gebrochene oder ganze Zahl größer 0 oder 0 sind.

Als organische Zusatzstoffe P sind zu nennen: Polyether, Polyester, Polycarbonate, Polyalkylenglykolsorbitanester, Polyakylenglykolglycidylether, Polyacrylamid, Poly(acrylamid-co-acrylsäure), Polyacrylsäure, Poly(acrylamid-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose, Polyacetate, ionische oberflächen- und grenzflächenaktive Verbindungen, Gallensäure oder deren Salze, Ester oder Amide, Carbonsäureester mehrwertiger Alkohole und Glycoside.

Diese Katalysatoren können kristallin oder amorph sein. Für den Fall, dass k gleich null ist, sind kristalline Doppelmetallcyanid-Verbindungen bevorzugt. Im Fall, dass k größer null ist, sind sowohl kristalline, teilkristalline, als auch substantiell amorphe Katalysatoren bevorzugt.

Von den modifizierten Katalysatoren gibt es verschiedene bevorzugte Ausführungsformen. Eine bevorzugte Ausfixhrungsform sind Katalysatoren der Formel (I), bei denen k größer null ist. Der bevorzugte Katalysator enthält dann mindestens eine Doppelmetallcyanid-Verbindung, mindestens einen organischen Liganden und mindestens einen organischen Zusatzstoff P.

Bei einer anderen bevorzugten Ausführungsform ist k gleich null, optional ist e auch gleich null und X ist ausschließlich ein Carboxylat, bevorzugt Formiat, Acetat und Propionat. Derartige Katalysatoren sind in der WO 99/16775 beschrieben. Bei dieser Ausführungsform sind kristalline Doppelmetallcyanid-Katalysatoren bevorzugt. Ferner bevorzugt sind Doppelmetallcyanid-Katalysatoren, wie in der WO 00/74845 beschrieben, die kristallin und plättchenförmig sind.

Die Herstellung der modifizierten Katalysatoren erfolgt durch Vereinigung einer Metallsalz-Lösung mit einer Cyanometallat-Lösung, die optional sowohl einen organischen Liganden L als auch einen organischen Zusatzstoff P enthalten können. Anschließend werden der organische Ligand und optional der organische Zusatzstoff zugegeben. Bei einer bevorzugten Ausführungsform der Katalysatorherstellung wird zunächst eine inaktive Doppelmetallcyanid-Phase hergestellt und diese anschließend durch Umkristallisation in eine aktive Doppelmetallcyanidphase überführt, wie in der PCT/EPO1/01893 beschrieben.

Bei einer anderen bevorzugten Ausfvhxungsform der Katalysatoren sind f, e und k ungleich Null. Dabei handelt es sich um Doppelmetallcyanid-Katalysatoren, die einen mit Wasser mischbaren organischen Ligand (im allgemeinen in Mengen von 0,5 bis 30 Gew.%) und einen organischen Zusatzstoff (im allgemeinen in Mengen von 5 bis 80 Gew.%) enthalten wie in der WO 98/06312 beschrieben. Die Katalysatoren können entweder unter starkem Rühren (24000U/Min mit Turrax) oder unter Rühren hergestellt werden wie in der US 5,158,922 beschrieben.

Insbesondere als Katalysator geeignet sind für das erfindungsgemäße Verfahren Doppelmetallcyanid-Verbindüngen, die Zink, Kobalt oder Eisen oder zwei davon enthalten. Besonders geeignet ist beispielsweise Berliner Blau.

Erfindungsgemäß bevorzugt werden kristalline DMC-Verbindungen eingesetzt. In einer bevorzugten Ausftihrungsform wird eine kristalline DMC-Verbindung vom Zn-Co-Typ als Katalysator verwendet, wobei der Katalysator als weitere Metallsalzkomponente Zinkacetat enthält. Derartige Verbindungen kristallisieren in monokliner Struktur und weisen einen plättchenförmigen Habitus auf. Derartige Verbindungen sind beispielsweise in der WO 00/74845 oder der PCT/EPO1/01893 beschrieben.

Für das erfindungsgemäße Verfahren als Katalysator geeignete DMC-Verbindungen können prinzipiell auf alle dem Fachmann bekannten Arten hergestellt werden. Beispielsweise können die DMC-Verbindungen durch direkte Fällung, "incipient wetness"-Methode, durch Herstellung einer Precursor-Phase und anschließende Umkristallisation hergestellt werden.

Die DMC-Verbindungen können für das erfindungsgemäße Verfahren als Pulver, Paste oder Suspension eingesetzt werden oder zu einem Formkörper verformt werden, in Formkörpern, Schäume oder ähnliches eingebracht werden, oder auf Formkörper, Schäume oder ähnliches aufgebracht werden.

Die im erfindungsgemäßen Verfahren eingesetzte Katalysator-Konzentration, bezogen auf das Endmengengerüst, ist erfindungsgemäß kleiner als 2000 ppm, bevorzugt kleiner als 1000 ppm, insbesondere kleiner als 500 ppm, besonders bevorzugt kleiner als 100 ppm, beispielsweise kleiner als 50 ppm.

Für das erfindungsgemäBe Verfahren können prinzipiell alle geeigneten Epoxide eingesetzt werden. Geeignet sind beispielsweise C₂-C₂₀-Alkylenoxide, wie Ethylenoxid, Propylenoxid, 1,2-Butylenoxid, 2,3-Butylenoxid, Isobutylenoxid, Pentenoxid, Hexenoxid, Cyclohexenoxid, Styroloxid, Dodecenepoxid, Ocatdecenepoxid und Mischungen dieser Epoxide. Insbesondere geeignet sind Ethylenoxid, Propylenoxid, 1,2 Butylenoxid, 2,3-Butylenoxid und Pentenoxid, wobei Propylenoxid, 1,2,Butylenoxid, 2,3-Butylenoxid und Isobutylenoxid besonders bevorzugt sind.

Daher betrifft die vorliegende Erfindung in einer bevorzugten Ausfahrungxform ein Verfahren zur Umsetzung von Epoxiden mit einer Starterverbindung in Gegenwart einer Doppelmetallcyanid-Verbindung als Katalysator mit verkürzter Indulctionsperiode, wobei das Epoxid Propylenoxid oder Butylenoxid oder ein Gemisch eines dieser Epoxide mit mindestens einem weiteren Epoxid ist

Erfindungsgemäß kann nach erfolgter Aktivierung der DMC-Verbindung durch Zusatz von Inertgas, beispielsweise Stickstoff, der Reaktorinnendruck auf über 1 bar (a) gebracht werden. Erfindungsgemäß ist es jedoch ebenso möglich, dass nach der Aktivierung kein zusätzliches Inertgas zugegeben wird.

In einer weiteren Ausführungsform betrifft die vorliegende Erfindung daher ein Verfahren zur Umsetzung von Epoxiden mit einer Starterverbindung in Gegenwart einer Doppelmetallcyanid-Verbindung als Katalysator mit verkürzter Induktionsperiode, wobei nach der Aktivierung der Doppelmetallcyanid-Verbindung gemäß Stufe (1) der Reaktorinnendruck nicht durch Inertgaszusatz erhöht wird.

In einer alternativen Ausführungsform betrifft die vorliegende Erfindung ein Verfahren zur Umsetzung von Epoxiden mit einer Starterverbindung in Gegenwart einer Doppelmetallcyanid-Verbindung als Katalysator mit verkürzter Induktionsperiode, wobei nach der Aktivierung der Doppelmetallcyanid-Verbindung gemäß Stufe (1) der Reaktorinnendruck durch Inertgaszusatz erhöht wird.

Auch im Fall, dass kein zusätzliches Inertgas zugegeben wird, kann der Reaktorinnendruck gegen Ende der Umsetzung auf Reaktorinnendrücke von 1 bar (a) oder darüber ansteigen. Dies kann beispielsweise durch Volumenzumahme des Produkts oder durch Inertgasspuren, die im Epoxid gelöst sein können, erfolgen. Die im Epoxid gelösten Inertgase werden nicht als Inertgaszusatz im Sinne der Erfindung verstanden.

Im Rahmen der vorliegenden Erfindung werden mindestens 5 % der Gesamtmenge des im Verfahren eingesetzten Epoxids bei einem Reaktorinnendruck von kleiner als 1 bar (a) zugegeben. Dabei kann die Zugabe dieser 5% der Gesamtenge des im Verfahren eingesetzten Epoxids als ganzes in der Reaktion gemäß Stufe (1) erfolgen oder verteilt über die Reaktionen gemäß Stufe (1) und gemäß Stufe (2).

Bevorzugt ist erfindungsgemäß ein Verfahren, bei dem mindestens 5% der Gesamtmenge des im Verfahren eingesetzten Epoxids verteilt über die Reaktionen gemäß Stufe (1) und gemäß Stufe (2) bei einem Reaktioninnendruck von kleiner als 1 bar (a) zugegeben werden.

Sofern im erfindungsgemäßen Verfahren Ethylenoxid eingesetzt wird, ist es bevorzugt, dass etwas Inertgas in den Reaktor dosiert wird, so dass der Reaktorinnendruck zwischen 500 und 950 mbar (a) liegt.

Erfindungsgemäß schlißt sich nach der Aktivierung der Doppelmetallcymid-Verbindung gemäß Stufe (1) eine Stufe (2) an Erfindungsgemäß beinhaltet Stufe (2) eine Umsetzung der Starter-Verbindung mit einem Epoxid in Gegenwart der aktivierten DMC-Verbindung. Bei der Umsetzung gemäß Stufe (2) kann es sich beispielsweise um die Anlagerung von einem oder mehreren Epoxidmolekülen handeln. Im Rahmen der vorliegenden Erfindung ist die Umsetzung gemäß Stufe (2) eine Polymerisation eines Epoxids in Gegenwart einer gemäß Stufe (1) aktivierten DMC-Verbindung.

Bei dem zur Polymerisation gebischten Epoxid kann es sich im Rahmen der vorliegenden Erfindung um em beliebiges Epoxid handeln. Es ist erfindungsgemäß möglich, dass das zweite Epoxid von dem zur Aktivierung der DMC-Verbindung eingesetzten Epoxid verschieden ist. Ebenso ist es jedoch im Rahmen der vorliegenden Erfindung möglich, dass das zur Aktivierung der DMC-Verbindung eingesetzte Epoxid und das zur Polymerisation eingesetzte Epoxid identisch sind.

Die erfindungsgemäß hergestellten Polyether können insbesondere als Trägeröle, Treibstoffadditive, Tenside oder Polyether für die Polyurethan-Synthese eingesetzt werden

Im folgenden wird die vorliegende Erfindung anhand von Beispielen näher erläutert.

### BEISPIELE

### Katalysatorsynthese:

In einem Rührkessel mit einem Volumen von 301, ausgestattet mit einem Propellerrührer, Tauchrohr für die Dosierung, pH-Sonde und Streulicht-Sonde wurden 16000 g wässrige Hexacyanocobaltsäure (Cobalt-Geltalt: 9 g/l) vorgelegt und unter Rühren auf 50°C erwärmt. Anschließend wurden unter Rühren mit einer Rührleistung von 0,4 W/1 9224 g wässrige Zinkacetat-Dihydrat-Lösung (Zink-Gehalt: 2,6 Gew.-%), welche auf ebenfalls 50°C temperiert war, innerhalb von 15 Minuten zugefahren.

Zu dieser Fällsuspension wurden 351 g Pluronic® PE 6200 (BASF AG) zugesetzt und die Mischung weitere 10 Minuten gerührt.

Anschließend wurden weitere 3690 g wässrige Zinkacetat-Dihydrat-Lösung (Zink-Gehalt: 2,6 Gew.-%) unter Rühren mit einer Rührenergie von 1 W/l innerhalb 5 Minuten zudosiert.

Die Suspension wurde zwei Stunden nachgerührt. Der pH-Wert fiel in dieser Zeit von 4,02 auf 3,27 und blieb dann konstant. Die so erhaltene Fällsuspension wurde anschließend abfiltriert und auf dem Filter mit dem 6-fachen Kuchenvolumen an Wasser gewaschen.

Der feuchte Filterkuchen wurde getrocknet und mittels Spalt-Rotor-Mühle in Tridekanol® N dispergiert. Die dabei erhaltene Suspension hatte einen Multimetallcyanidgehalt von 5 Gew.-%.

### Beispiel:

In einem 10 1 Autoklaven, ausgerüstet mit Schrägblattrührer, Temperaturmessung und Epoxiddosierung, wurden die in Tabelle 1 angegebenen Mengen an Starter und DMC vorgelegt. Anschließend wurde die Starter/DMC-Mischung bei 100 °C im Vakuum bei 10 mbar entwässert. Der Autoklav wurde dann auf die in Tabelle 1 angegebene Reaktionstemperatur gebracht. In den evakuierten Autoklaven wurde anschließend in Tabelle 1 angegebene Menge an Epoxid zudosiert. Es wurden bei diesen Versuchen keine Induktionsperiode beobachtet. Die Reaktion sprang sofort an. Der am Ende der Reaktion erreichte Reaktorinnendruck ist in der Tabelle 1 angegeben.

### Vergleichsbeispiel:

In einem 10 1 Autoklaven, ausgerüstet mit Schrägblattrührer, Temperaturmessung und Epoxiddosierung, wurden die in Tabelle 1 angegebenen Mengen an Starter und DMC vorgelegt. Anschließend wurde die Starter/DMC-Mischung bei 120 °C im Vakuum (10 mbar) entwässert. Das Vakuum wurde anschließend mit Stickstoff gebrochen und der Reaktorinnendruck auf einen Wert von größer 1 bar eingestellt. Der Autoklav wurde dann auf die in Tabelle 1 angegebene Reaktionstemperatur gebracht. In den Autoklaven wurde anschließend die in Tabelle 1 angegebene Menge an Epoxid zudosiert. Die beobachteten Induktionsperioden finden sich in Tabelle 1. Der am Ende der Reaktion erreichte Reaktorinnendruck ist in Tabelle 1 angegeben.

| Versuch | Starter | Startermenge [g] | Epoxid | Epoxidmenge [g] | Katalysatormenge [g] | Temperatur [°C] | Induktionszeit [min] | Innendruck [bar] |
|---|---|---|---|---|---|---|---|---|
| 1 | Tridekanol | 1200 | PO | 5220 | 1,3 | 140 | 0 | 1,8 |
| 2 | Tridekanol | 1200 | PO | 5220 | 0,3 | 140 | 1 | 1,8 |
| 3 | Tridekanol | 1200 | BuO | 5800 | 2,1 | 140 | 0 | 2,0 |
| 4 | Tridekanol | 1200 | BuO | 5800 | 0,4 | 140 | 0 | 1,9 |
| | | | | | | | | |
| V1 | Tridekanol | 1200 | PO | 5220 | 1,3 | 135 | 15 | 4,3 |
| V2 | Tridekanol | 700 | BuO | 5542 | 0,3 | 100 | 20 | 4,8 |
| V3 | Tridekanol | 700 | BuO | 5542 | 1,3 | 145 | 90 | 5,4 |

## Patentansprüche

1. Verfahren zur Umsetzung von Epoxiden mit einer Starterverbindung in Gegenwart einer Doppelmetallcyanid- Verbindung als Katalysator mit verkürzter Induktionsperiode, umfassend mindestens die Stufe (1) und (2)
(1) Aktivierung der Doppelmetallcyanid-Verbindung durch Zugabe des Epoxids zu einem Gemisch aus Doppelmetallcyanid-Verbiundung und Starterverbindung, wobei der Reaktorinnendruck kleiner als 1 bar(a) ist,
(2) Polymerisation eines Epoxids in Gegenwart einer gemäß Stufe (1) aktivierten Doppelmetallcyanid-Verbinduag,
wobei mindestens 5 % der Gesamtmenge des im Verfahren eingesetzten Epoxids bei einem Reaktorinnendruck von kleiner als 1 bar(a) zugegeben werden und die Starterverbindung ein monofunktioneller Alkohol mit 2 bis 24 C-Atomen ist.

2. Verfahren nach Anspruch 1, **dadurch gekennzeichnet, dass** der Reaktorinnendruck bei der Zugabe gemäß Stufe (1) kleiner als 500 mbar(a) ist.

3. Verfahren nach Anspruch 1 oder 2, **dadurch gekennzeichnet, dass** nach der Aktivierung der Doppelmetallcyanid-Verbindung gemäß Stufe (1) der Reaktorinnendruck nicht durch Inertgaszusatz erhöht wird.

4. Verfahren nach Anspruch 1 oder 2, **dadurch gekennzeichnet, dass** nach der Aktivierung der Doppelmetallcyanid-Verbindung gemäß Stufe (1) der Reaktorinnendruck durch Inertgaszusatz erhöht wird.

5. Verfahren nach einem der Ansprüche 1 bis 4, **dadurch gekennzeichnet, dass** das Epoxid Propylenoxid oder Butylenoxid oder eine Gemisch eines dieser Epoxide mit mindestens einem weiteren Epoxid ist.

## Claims

1. A process for reacting epoxides with an initiator compound in the presence of a double metal cyanide compound as a catalyst, said process having a shortened induction period and comprising a least state (1) and (2)
(1) activating the double metal cyanide compound by adding the epoxide to a mixture of double metal cyanide compound and initiator compound at an internal reactor pressure of less than 1 bar (a),
(2) polymerizing an epoxide in the presence of a double metal cyanide compound activated according to stage (1)m, wherein at least 5% of the total amount of epoxide used in the process is added at an internal reactor pressure of less than 1 bar (a) and the initiator compound is a monofunctional alcohol having from 2 to 24 carbon atoms.

2. The process according to claim 1, wherein the internal reactor pressure at the addition of stage (1) is less than 500 mbar (a).

3. The process according to claim 1 or 2, wherein the internal reactor pressure is not increased by adding inert gas after the activation of the double metal cyanide compound of stage (1).

4. The process according to claim 1 or 2, wherein the internal reactor pressure is increased by adding inert gars after the activation of the double metal cyanide compound of stage (1).

5. The process according to any of claims 1 to 4 wherein the epoxide is propylene oxide or butylene oxide or a mixture of one of these epoxides with at least one further epoxide.

## Revendications

1. Procédé de transformation d'époxydes avec un composé amorceur en présence d'un composé de cyanure bimétallique comme catalyseur avec période d'induction réduite, comprenant au moins l'étape (1) et (2),
(1) l'activation du composé de cyanure bimétallique par addition de l'époxyde à un mélange constitué d'un composé de cyanure bimétallique et d'un composé amorceur, la pression intérieure du réacteur étant inférieure à 1 bar (a);
(2) la polymérisation d'un époxyde en présence d'un composé de cyanure bimétallique activé selon l'étape (1),
dans lequel au moins 5 % de la quantité totale de l'époxyde utilisé dans le procédé est ajouté à une pression intérieure du réacteur inférieure à 1 bar (a) et le composé amorceur est un alcool monofonctionnel avec 2 à 24 atomes de carbone.

2. Procédé selon la revendication 1, **caractérisé en ce que** la pression intérieure du réacteur lors de l'addition selon l'étape (1) est inférieure à 500 mbar (a).

3. Procédé selon la revendication 1 ou 2, **caractérisé en ce qu'**après l'activation du composé de cyanure bimétallique selon l'étape (1), la pression intérieure du réacteur n'augmente pas par l'addition de gaz inerte.

4. Procédé selon la revendication 1 ou 2, **caractérisé en ce qu'**après l'activation du composé de cyanure bimétallique selon l'étape (1), la pression intérieure du réacteur augmente par l'addition de gaz inerte.

5. Procédé selon l'une des revendications 1 à 4, **caractérisé en ce que** l'époxyde est un oxyde de propylène ou un oxyde de butylènes ou un mélange d'un de ces époxydes avec au moins un autre époxyde.
